# EUROPEAN PATENT SPECIFICATION

(11) **EP 1 536 621 B1**
(45) Date of publication and mention of the grant of the patent: **28.02.2007**
(21) Application number: 03293082.8
(22) Date of filing: 27.11.2003
(51) Int. Cl.: H04M 3/42, H04M 7/00, H04L 29/06

(54) **Terminal number portability in a VoIP network**
Rufnummernportabilität in "Voice over IP" Netzen
Portabilité de numéros de terminal dans un réseau de télécommunications IP

(43) Date of publication of application: 01.06.2005
(73) Proprietor: ALCATEL, 75008 Paris (FR)
(72) Inventor: Baeder, Rainer, Dipl.-Ing., 70771 Leinfelden (DE); Schmidt, Hartmut, Dipl.-Ing.(FH), 70723 Grossbottwar (DE)
(74) Representative: Rausch, Gabriele

(56) References cited:
- EP-A- 0 964 560
- EP-A- 1 022 916
- WO-A-00/10314
- DE-A- 4 335 803
- GB-A- 2 263 843
- PATENT ABSTRACTS OF JAPAN vol. 010, no. 275 (E-438), 18 September 1986 (1986-09-18) & JP 61 095693 A (NEC CORP), 14 May 1986 (1986-05-14)

## Description

The present invention relates to a call control method for IP based telephone services and to a call control server for providing IP based telephone services within a communication network.

Existing PSTN telecommunication systems (PSTN = Public Switched Telecommunication Network) provides various services performing a kind of redirection or call forwarding of calls, directed to a telephone number. Further, services in private telephone systems are known which assigns different telephones to a user group, wherein each of the telephones of the user group will ring, when an incoming call to one of the telephones of the user group is detected. Also in this case, there is a one to one mapping between the terminal and telephone number.

In contrast to existing PSTN telecommunication systems, next generation networks will consist out of many new devices, like Soft Switches, media gateway controllers, media gateways, SIP-phones, SIP-proxies and so on (SIP = Session Initiation Protocol). From an end-user point of view we have in such kind of environment various scenarios which applies here. Some end-users will reuse their analogue telephone set of digital ISDN appliance (ISDN = Integrated Services Digital Network). Such end-users can be connected by means of legacy PSTN network. Further, they can be connected by residential gateways, access gateways or integrated access devices to the next generation networks. Some end-users will use or buy new equipment like SIP-phones, SIP-clients and so on. Such equipment can be connected by means of broadband access CPE (CPE = Customer Premise Equipment) like HFC, DSL or WLAN (HFC = Hybrid Fiber Coax; DSL = Digital Subscriber Line; WLAN = Wireless LAN).

Users connected via legacy PSTN network to new generations networks are simply connected from operators craftsmen at central office side. Such users do not see any difference. In contrast to this, users by means of residential gateways, access gateway, integrated access devices and SIP-phones have to configure the new devices by themselves.

EP 0 964 560 A1 describes a method for forwarding communications incoming into a user's home network to the user currently visiting a network foreign to the user's home network. The visiting user sends a registration request message to the visited gatekeeper from where this request message is forwarded to the gatekeeper of the user's home network providing the user's current IP address. After positive authentication of the user by the home network gatekeeper, incoming communications can be forwarded to the roaming user.

WO 00/10314 describes a communications network which facilitates the log-on to said communications network from a user's terminal at a connection where no log-on has been completed so far. A connection is established to a specialised log-on server for the purpose of log-on of this connection and in order to individually set up the connection according to the user's requirements.

It is the object of the present invention to improve the call control within a next generation network environment.

The object of the present invention is achieved by a call control method for IP based telephone services, wherein two or more IP telephone terminals are assigned to a telephone number commonly shared by said IP telephone terminals and IP address data of said IP telephone terminals are stored in the registry of a call control server responsible for control of VoIP calls directed to this telephone number, wherein one of these IP telephone terminals transmits a presence message to said call control server, when a presence button of this IP telephone terminal is pressed, and wherein a VoIP call directed to the telephone number is routed to that one of the IP telephone terminals assigned to the telephone number, from that the call control server has received the presence message (VoIP = Voice over IP; IP = Internet Protocol).

The object of the present invention is further achieved by a call control server for providing IP based telephone services within a communication network, wherein the call control server is responsible for controlling VoIP calls directed to a telephone number and wherein the call control server comprises a communication unit for receiving presence messages from IP telephone terminals and a call control unit adapted to assign two or more IP telephone terminals to that telephone number commonly shared by said IP telephone terminals, to store IP addressed data of said IP telephone terminals in a registry of the call control server and to route a VoIP call directed to the telephone number to that one of the IP telephone terminals assigned to the telephone number, the call control server received a presence message from.

The invention makes it possible for a user to use various, different telephone sets and remain still available via one single telephone number. When the end user presses a kind of presence button, the intelligence in the network takes care that only some of the end-equipment devices will ring. Only one or more of the end-equipment devices are in a actuated state once there is an incoming call. Further, the invention supports a smooth evolution of existing PSTN networks to next generation network and the coexistence of the above-specified scenarios.

Further advantages are achieved by the embodiments indicated by the dependent claims.

A powerful way of sharing multiple telephone sets can be achieved by the usage of configuration cards assigned to clients. IP telephone configuration data stored on such a configuration card are transferred from the configuration card to one or several of the IP telephone terminals. One configuration card can be used for several different type of IP telephone terminals. But, it is also possible to assign multiple configuration cards to a subscriber. The IP telephone configuration data stored on the configuration card includes address data of the call control server. The respective IP telephone terminal contacts the call control server by means of this transferred address data. Further, it transfers terminal data to the call control server. The call control server registers the IP telephone terminal by means of the received terminal data. Further, the transferred IP telephone configuration data includes subscriber data and the IP telephone terminal transfers the received subscriber data to the call control server. The assignment of IP telephone terminals to telephone numbers is executed by help of such transferred subscriber data. IP telephone terminals assigned to the same subscriber are assigned to the same telephone number.

For example, the configuration card subscriber has the following couple of telephone sets: a fixed telephone set with loudspeaker/microphone, display and better voice quality; a small mobile with low weight, small dimension - which fits in every pocket - for riding a bicycle; and a multimedia mobile with a camera, higher weight, and bigger dimension for usage at events to transmit pictures on the spot. All these telephone sets have the same configuration card and will be used at different opportunities, while the telephone sets have different settings (codec, voice quality...).

This approach provides a high degree of user friendliness and flexibility.

Further advantages are achieved when the IP telephone configuration data stored on the configuration card include a quality of service profile specifying the quality of service assigned to the subscriber. Further, the terminal data can include terminal descriptors specifying the type of terminal and the communication protocols which have to be used for communicating with the respective IP terminal. Such kind of data is used by the IP telephone terminal and a call control server to provide a telephone service to the subscriber which is well adapted to the needs of the subscriber and the capabilities of the respective IP telephone terminal.

Preferably, an authentisation procedure is executed between the IP telephone terminal and the call control server during the registering process. Thereby, safety, security and privacy of communication is guaranteed.

To improve user friendliness, it is proposed to automatically execute the registering process as soon as the configuration card is connected with the IP telephone terminal. The subscriber has not to take care of the registering process and can immediately use his IP telephone terminal as soon as such connection is established.

According to a preferred embodiment of the invention, the call control server supports all the IP telephone terminals assigned to the telephone number in the establishment of VoIP calls. Therefore, it is possible for the user to initiate an outgoing call from each and all of its IP telephone terminals. In contrast to this, the call control server directs incoming VoIP calls to that one of the IP telephone terminals assigned to the subscriber, from that it at least received a presence message.

These as well as other features and advantages of the invention will be better appreciated by reading the following detailed description of presently preferred exemplary embodiments taken in conjunction with accompanying drawings of which:
- Fig. 1: is a block diagram showing several components of a communication system with a call control server according to the present invention.
- Fig. 2: is a functional view showing the call control server of Fig. 1, an IP telephone terminal and a configuration card.

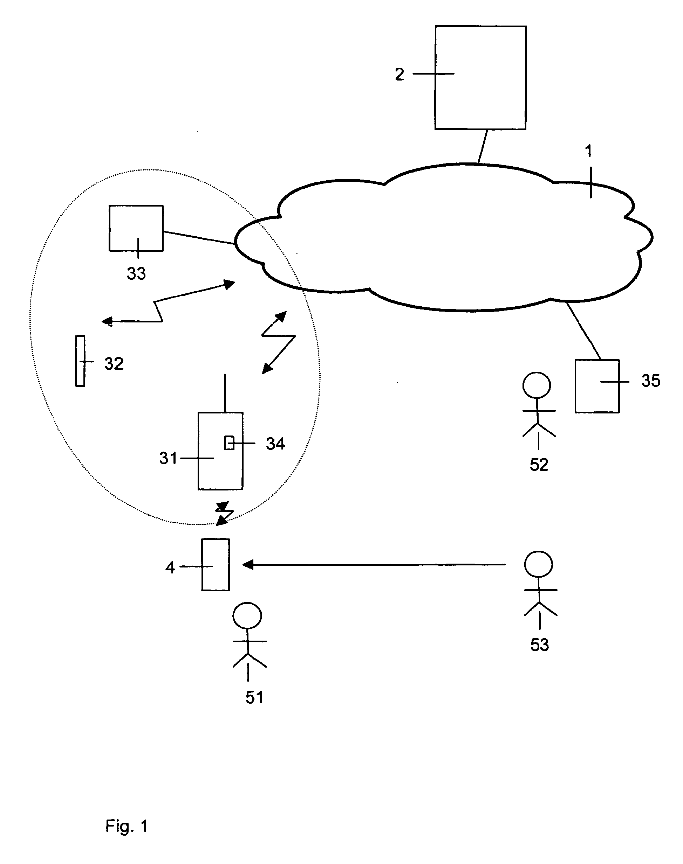

Fig. 1 shows a communication network 1, a call control server 2, several IP telephone terminals 31, 32, 33 and 35, a configuration card 4, several subscribers 51 and 52 and a service provider 53. The IP telephone terminals 31, 32 and 33 are assigned to the subscriber 51 and the IP telephone terminal 35 is assigned to the subscriber 52.

The communication network 1 is a NGN communication network (NGN = Next Generation Network) which is based on a distributed IP network (IP = Internet Protocol). The architecture of this communication network is split into two main sections, the control plane, which is responsible for controlling the communication connection between users of the communication system, and the transport plane, which is responsible for the transportation of the associated media streams. The transport plane can be formed by various different types of physical networks, for example ATM networks or MPLS networks (ATM = Asynchroune Transfer Mode; MPLS = Multiprotocol Lables Switching), which are linked via a common level 3 IP protocol layer. Further, the transport plane may comprise one or several telephone networks, for example PSTN or ISDN-networks (PSTN = Public Switched Telecommunication network; ISDN = Integrated Service Digital Network). Further, the communication network 1 may include fixed and mobile communication networks, for example GSM, UMTS or CDMA 2000 cellular networks (GSM = Global System for Mobile Communication; UMTS = Universal Mobile Telecommunications System).

The control plane of the communication network 1 contains various media gateways, access gateways and switching nodes responsible for the switching and routing of the media streams through the communication network 1. Such media gateways support stream-like communication as voice, fax or video-communication between two or more terminals linked to the communication network 1. Further, such media gateways may provide seamless working of voice and fax connections between public switched telephone networks and IP based networks.

The call control server 2 is part of the control plane of the communication network 1. It provides all control functions for network elements of the transport layer of the communication network 1. For example, the call control server 2 is a media gateway controller which is within an NGN architecture the centralized intelligent instance for providing new VolP or multimedia services (VoIP = Voice over IP). A media gateway controller is a single entity which controls several media gateways via a specific interface (for example H.248) for the sake of providing an access point for subscribers of telecommunication networks. The media gateway controller provides independent call functionalities together with switching functions for basic-and supplementary-services in addition with, for example, billing-, routing- and measurement capabilities for network operators and telecommunication service providers.

Within such context, the call control server 2 provides the functionality of a SIP-server (SIP = Session Initiation Protocol).

But, it is also possible that the communication network 1 is a pure IP network and the call control server 2 is a SIP-server supporting the establishment of VoIP connections through the IP network constituted by the communication network 1.

The IP telephone terminals 31, 32, 33 and 35 are IP-phones or computers executing an IP phone client. For example, these terminals are SIP-phones or computers executing a SIP client. Further, the IP telephone terminal 31, 32, 33 and 35 can be terminals connected via a residential gateway, integrated access device (IAD) or embedded media termination device (eMTD) with the communication network 1. Such residential gateways provide a connection between a LAN or wireless LAN environment and an ISDN interface. Such integrated access devices or embedded media termination devices providing a connection between a LAN or wireless LAN environment and a DSL cable modem (DSL = Digital Subscriber Line). Further, the IP phone terminals 31, 32, 33 and 35 can be connected via an access node or access gateway of a private network to the communication network 1.

According to an embodiment of this invention, the IP phone terminal 33 is a fixed terminal, for example a computer with a SIP-client, the IP telephone terminal 32 is a small mobile terminal with low weight, small dimension and reduced functionalities, and the IP telephone terminal 31 is a multimedia mobile with a camera and enhanced input and output facilities.

To enable the establishment of VolP communications to his IP telephone terminals 31, 32 and 33, the subscriber 51 has to choose a service provider, sign a contract and configurate his IP telephone terminals 31, 32 and 33. For example, the subscriber 51 chooses the service provider 53, which is the service provider operating the call control server 2. The network operator 53 delivers the configuration card 4 to the subscriber 51. This is, for example, done via postal mail. IP telephone configuration data are stored on the configuration card 4. This data contain the necessary information which makes it possible to the IP telephone terminals 31, 32 and 33 to enroll themselves within the call control server 2 and make the VoIP telephone service provided by the call control server 2 available to the subscriber 51.

The subscriber 51 uses the configuration card 4 to transfer the IP telephone configuration data stored on the configuration card 4 to his IP telephone terminals 31, 32 and 33. But, it is also possible that the subscriber 51 receives from the service provider 53 several configuration cards, each for one of the IP telephone terminals 31, 32 and 33. Such configuration cards can contain different sets of configuration data, which makes it, for example, possible to configure different services and quality of services at different IP telephone terminals of the subscriber 51.

The IP telephone terminals 31, 32 and 33 are registered within the call control server 2 by means of IP telephone configuration data downloaded from the configuration card 4. The call control server 2 assigns the IP telephone terminals 31, 32 and 33 of the subscriber 51 to a single telephone number commonly shared by these IP telephone terminals. Further, it stores IP address data of the IP telephone terminals 31, 32 and 33 in its registry.

In the following, the call control server 2 monitors whether it receives a presence message from one of the IP telephone terminals 31, 32 and 33. For example, the IP telephone terminal 31 transmits such a presence message to the call control server 2, when detecting that a presence button 34 is pressed by the subscriber 51. In the following, incoming VoIP calls directed to the telephone number of the subscriber 51 are routed to that one of the IP telephone terminals 31, 32 and 33, the call control server 2 has received the presence message from. If, for example, the subscriber 52 tries to set up a phone call to the subscriber 51 via an IP telephone terminal 35, the call control server 2 routes this call to the IP telephone terminal 31, from which it has received a presence message.

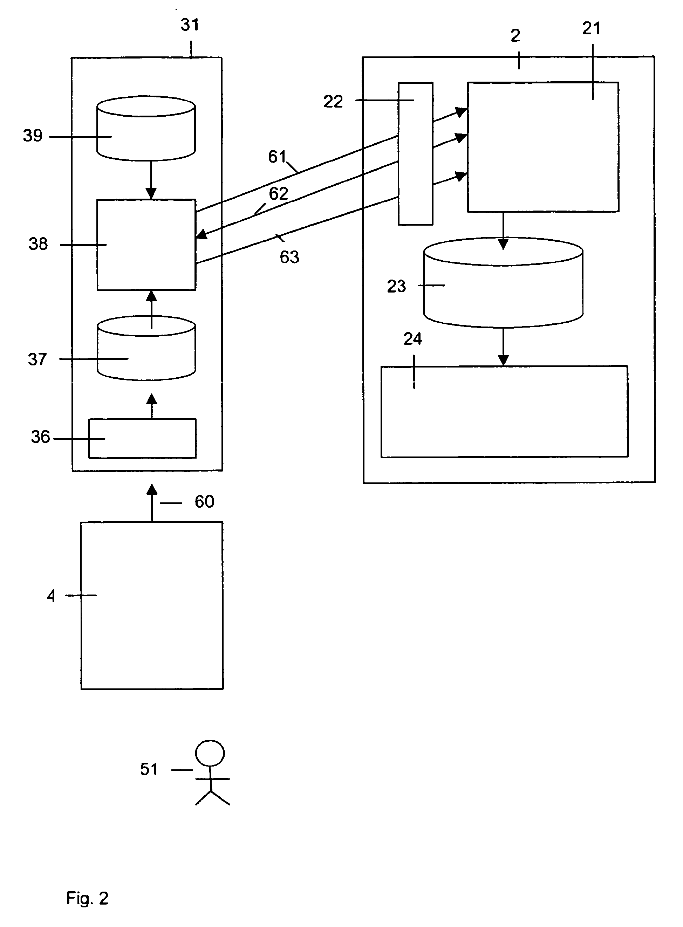

In the following, the details of the invention are described by hand of Fig. 2.

Fig. 2 shows the IP telephone terminal 31, the configuration card 4, the subscriber 51 and the call control server 2.

The configuration card 4 is a smart card, chip card or plane memory card. Different IP telephone configuration data are stored in the memory means of the configuration card 4. The IP telephone configuration data include address data of the call control server that is responsible for serving the telephone number assigned to the subscriber 51, for example, the IP address of the call control server 2. Further, it includes subscriber data which makes it possible to identify the subscriber 51 towards the responsible call control server. In addition, the IP telephone configuration data can include a quality of service profile specifying the quality of services assigned to the subscriber. Such quality of service parameter may be delay time, packet size (e. g. six packets containing 5ms, one packet containing 30ms), fixed route or secure route, use of a secured, encrypted connection or not, codec used for the communication and/or codec selection strategy. For example, the IP telephone configuration data may contain a G.729, a G.726 and a G.711 codec. The IP telephone terminal configured by help of the configuration card 4 chooses first the G.729 codec. If the voice quality does not fit with preset quality level, it changes to the G.726 codec or G.711 codec.

The IP telephone terminal 31 comprises, from functional point of view, two memory units 37 and 39, a configuration card reader 36 and a control unit 38.

The call control server 2 is constituted by one or several interconnected computers, a software platform running on this hardware platform and several application programs executed by the system platform formed by the hardware and software platform. The functionalities of the call control server 2 are provided by the execution of these software components on the hardware platform of the call control server 2. From functional point of view, the call control server comprises a communication unit 22, two control units 21 and 24 and a memory unit 23.

The configuration card reader 36 of the IP phone terminal 31 is, for example, a connector which is galvanically coupled with the configuration card 4 when the configuration card 4 is inserted into the IP telephone terminal 31. But, it is also possible that the configuration card reader 36 is connected to the configuration card 4 in a wireless way. For example, the configuration card reader 36 exchanges data with the configuration card 4 via an infrared or radio interface, for example a bluetooth or wireless LAN interface. That makes it possible that the configuration card 4 has solely to be hold in the neighborhood of the IP telephone terminals 31 to enable the download of IP telephone configuration data to the IP telephone terminal 31.

The downloaded IP telephone configuration data are stored in the memory unit 37, which holds in the following a copy of the IP telephone configuration data stored on the configuration card 4.

The memory unit 39 holds terminal specific data, for example the type of the IP telephone terminal 31, and the communication protocol supported by the IP telephone terminal 31. For example, the telephone terminal 31 supports the SIP, the MGCP, the MEGACO, H.323, and/or the H.248 protocol used for a VoIP communication via the communication network 1. (MGCP = Media Gateway Control Protocol; MEGACO = Media Gateway Control Protocol). Further, the IP telephone terminal 31 may support further proprietary protocols, for example SKINI.

To initiate the registering of the IP telephone terminal 31 in the registry of the call control server 2, the control unit 38 determines the IP address of the IP telephone terminal 31 and sends a registration request message to the call control server specified in the IP telephone configuration data received from the configuration card 4. Within the context of this registration request message, it transfers terminal data to this call control server. These terminal data includes at least the IP address of the IP telephone terminal 31. Preferably, this data contains in addition various of the data stored in the memory units 37 and 39. For example, this terminal data include terminal descriptors specifying the type of terminal and the communication protocol which has to be used for communicating with the IP telephone terminal 31. Further, it transmits subscriber data to the call control server.

Optionally, the control unit 38 executes in the following an authentication procedure. For example, it requests the subscriber 51 to input a PIN code which is transferred to the call control server for authentication purpose (PIN = Personal Identification Code). Further, also a PIN/TAN based authentication procedure or an encryption key based authentication procedure can be executed between the IP telephone terminal 31 and the call control server (TAN = Transaction Number).

After registration, the control unit 38 monitors whether the subscriber 51 presses the presence button 34. This presence button may be a programmable key of the IP telephone terminal 31. Further, several or all of the keys of the IP telephone terminal 31 can be defined as presence button. When the control unit 38 detects the pressing of the presence button, it sends a presence message 63 to the call control server addressed in the IP telephone configuration data.

The communication unit 22 of the call control server 22 provides an interface to the terminal registration function of the call control server 2. It makes it possible for this function to receive messages from terminals connected to the communication network 1, for example from the IP telephone terminals 31, 32, 33 and 35.

The control unit 21 provides the terminal registration function of the call control server 2. When receiving a registration request message, for example from the control unit 38 of the IP telephone terminal 31, it executes by means of the terminal data submitted in the context of this request a terminal registration process. By means of the submitted IP address and subscriber data of the requesting terminal, it establishes the registration of this terminal in the registry of the call control server 2, which is formed by the memory unit 23. Thereby, it is possible that the control unit 21 assigns two or more IP telephone terminals to a single telephone number commonly shared by said IP telephone terminals. For example, if the control unit 21 detects that the subscriber data of the IP telephone terminals 31, 32 and 33 assigns these IP telephone terminals to one and same subscriber, it assigns all these IP telephone terminals to the same telephone number, which is the telephone number of the subscriber 51. Further, it stores the IP address data of each of these IP telephone terminals as well as the other terminal data submitted by these IP phone terminals within the memory unit 23.

If it receives a presence message from one of the IP telephone terminals, it locates the data set assigned to this terminal within the memory unit 23 and stores an indication indicating that the presence button of this terminal is pressed. Further, the date of receipt may in addition be stored in this data set.

The control unit 24 controls by help of the data stored in the memory 23 the routing of incoming calls. If a incoming VoIP call is directed to a telephone number to which two or more IP telephone terminals are assigned, it checks whether a presence message is received from one of these IP telephone terminals. If several of such messages are received for several terminals, it selects the IP telephone terminal at last received a presence message. But, it is also possible to perform some different strategies:

For example, it directs the call to all of the IP telephone terminals in parallel, which has sent a present message. Further, it can direct the VoIP call to these IP telephone terminals which has sent a presence message within a sliding time frame, for example within the last five hours.

## Claims

1. Call control method for IP based telephone services,
**characterized in**
**that** the method comprises the steps of:
assigning two or more IP telephone terminals (31, 32, 33) to a telephone number commonly shared by said IP telephone terminals and registering said IP telephone terminals (31, 32, 33) within a call control server (2) by storing IP address data of said IP telephone terminals (31, 32, 33) received within the context of a registration request message in the registry (23) of said call control server (2) for control of VoIP calls directed to this telephone number;
transmitting a presence message (63) from one of the IP telephone terminals (31) to said call control server (2), when a presence button (34) of this IP telephone (31) is pressed;
when receiving said presence message (63) from the one of the IP telephone terminals (31), locating the IP address data assigned to said one of the IP telephone terminals (31) and stored in the registry (23) of said call control server (2) within the registry (23) of the call control server (2); and
routing, by help of the located IP address data a VolP call directed to the telephone number to that IP telephone terminal (31) of the IP telephone terminals (31, 32, 33) assigned to the telephone number, the call control server (2) has received the presence message (63) from.

2. The call control method of claim 1,
**characterized in**
**that** the method comprises the further steps of:
transferring IP telephone configuration data (60) stored on a configuration card (4) of a subscriber (51) from the configuration card (4) to one or several of the IP telephone terminals (31, 32, 33), the IP telephone configuration data (60) include address data of the call control server (2); contacting the call control server (2) by means of the transferred address data; transferring terminal data (61) from the IP telephone terminal (31) to the call control server (2), the terminal data (61) include the IP address of the IP telephone terminal (31); and
registering the IP telephone terminal (31) by means of the received terminal data (61).

3. The call control method of claim 2,
**characterized in**
**that** the transferred IP telephone configuration data (60) include subscriber data, that the IP telephone terminals (31, 32, 33) transfer the received subscriber data to the call control server (2), and that the call control server (2) assigns the IP telephone terminals (31, 32, 33) by means of the received subscriber data to the telephone number.

4. The call control method of claim 2,
**characterized in**
**that** the IP telephone configuration data (60) include a quality of service profile specifying the quality of services assigned to the subscriber (51).

5. The call control method of claim 2,
**characterized in**
**that** the terminal data (61) include terminal descriptors specifying the type of terminal and the communication protocols which have to be used for communicating with the respective IP telephone terminal (31, 32, 33).

6. The call control method of claim 2,
**characterized in**
**that** the method comprises the further step of executing an authenication procedure (62) between the IP telephone terminals (31, 32, 33) and the call control server (2).

7. The call control method of claim 2,
**characterized in**
**that** the method comprises the further step of automatically executing a registering process as soon as the configuration card is connected with the IP telephone terminal (31, 32, 33).

8. The call control message of claim 1,
**characterized in**
**that** the call control server (2) supports all the IP telephone terminals (31, 32, 33) assigned to the telephone number in the establishment of VoIP calls, but directs incoming VoIP calls to the IP telephone terminal (31) from that it received a presence message (63) at last.

9. The call control method of claim 1,
**characterized in**
**that** the IP telephone terminals (31, 32, 33) assigned to a telephone number commonly shared by said IP telephone terminals are different types of terminals.

10. A call control server (2) for providing IP based telephone services within a communication network (1), wherein the call control server (2) is responsible for controlling VolP calls directed to a telephone number,
**characterized in**
**that** the call control server (2) comprises a communication unit (22) for receiving presence messages (63) from IP telephone terminals (31, 32, 33), and a call control unit (21, 24) adapted for: assigning two or more IP telephone terminals (31, 32, 33) to said telephone number commonly shared by said IP telephone terminals (31, 32, 33) and registering said IP telephone terminals (31, 32, 33) within the call control server (2) by storing IP address data of said IP telephone terminals received within the context of a registration request message in a registry (23) of the call control server (2); when receiving a presence message (63) from one of said IP telephone terminals (31) when a presence button (34) of this IP telephone (31) is pressed, locating the IP address data assigned to said one of the IP telephone terminals (31) and stored in the registry (23) of said call control server (2) within the registry (23) of the call control server (2); and routing, by help of the located IP address data, a VolP call directed to the telephone number to that IP telephone terminal (31) of the IP telephone terminals (31, 32, 33) assigned to the telephone number, the call control server (2) received the presence message (63) from.

## Patentansprüche

1. Verfahren zur Verbindungssteuerung bei IP-basierten Telefondiensten,
**dadurch gekennzeichnet,**
**dass** dieses Verfahren folgende Schritte umfasst:
Zuordnung von zwei oder mehr IP-Telefonanschlüssen (31, 32, 33) zu einer Rufnummer, die von den genannten IP-Telefonanschlüssen gemeinsam genutzt wird, und Registrierung der genannten IP-Telefonanschlüsse (31, 32, 33) in einem Verbindungssteuerungs-Server (2) durch Speichern der IP-Adressdaten der genannten IP-Telefonanschlüsse (31, 32, 33), die im Kontext einer Registrierungsanforderung eingegangen sind, im Register (23) des genannten Verbindungssteuerungs-Servers (2), mit dem Ziel, die VoIP-Anrufe zu steuern, die für diese Rufnummer eingehen;
Übertragung einer Präsenzmeldung (63) von einem der IP-Telefonanschlüsse (31) an den genannten Verbindungssteuerungs-Server (2), wenn eine Präsenztaste (34) dieses IP-Telefonanschlusses (31) betätigt wird;
sobald die genannte Präsenzmeldung (63) von einem der IP-Telefonanschlüsse (31) eingeht, Lokalisierung der IP-Adressdaten, die dem genannten IP-Telefonanschluss (31) zugewiesen und im Register (23) des genannten Verbindungssteuerungs-Servers (2) gespeichert sind, im Register (23) des Verbindungssteuerungs-Servers (2); und
Routing eines für diese Rufnummer eingehenden VoIP-Anrufs, durch Nutzung der lokalisierten IP-Adressdaten, an denjenigen IP-Telefonanschluss (31) der dieser Rufnummer zugewiesenen IP-Telefonanschlüsse (31, 32, 33), von dem der Verbindungssteuerungs-Server (2) die Präsenzmeldung (63) erhalten hat.

2. Verfahren zur Verbindungssteuerung gemäß Anspruch 1,
**dadurch gekennzeichnet,**
**dass** dieses Verfahren außerdem die folgenden Schritte umfasst:
Übertragung der Konfigurationsdaten (60) der IP-Telefone, die auf einer Konfigurationskarte (4) eines Teilnehmers (51) gespeichert sind, von dieser Konfigurationskarte (4) an einen oder mehrere IP-Telefonanschlüsse (31, 32, 33), wobei die Konfigurationsdaten (60) der IP-Telefone die IP-Adressdaten des Verbindungssteuerungs-Servers (2) umfassen;
Anwahl des Verbindungssteuerungs-Servers (2) mit den übertragenen Adressdaten;
Übertragung der Anschlussdaten (61) vom IP-Telefonanschluss (31) an den Verbindungssteuerungs-Server (2), wobei die Anschlussdaten (61) die IP-Adresse des IP-Telefonanschlusses (31) umfassen; und
Registrierung des IP-Telefonanschlusses (31) mit den erhaltenen Anschlussdaten (61).

3. Verfahren zur Verbindungssteuerung gemäß Anspruch 2,
**dadurch gekennzeichnet,**
**dass** die Konfigurationsdaten (60) der IP-Telefone die Teilnehmerdaten umfassen, dass die IP-Telefonanschlüsse (31, 32, 33) die erhaltenen Teilnehmerdaten an den Verbindungssteuerungs-Server (2) übertragen und dass der Verbindungssteuerungs-Server (2) die IP-Telefonanschlüsse (31, 32, 33) anhand der erhaltenen Teilnehmerdaten der Rufnummer zuweist.

4. Verfahren zur Verbindungssteuerung gemäß Anspruch 2,
**dadurch gekennzeichnet,**
**dass** die Konfigurationsdaten (60) der IP-Telefone ein Dienstgüteprofil umfassen, das die dem Teilnehmer (51) zugewiesene Dienstgüte spezifiziert.

5. Verfahren zur Verbindungssteuerung gemäß Anspruch 2,
**dadurch gekennzeichnet,**
**dass** die Anschlussdaten (61) Deskriptoren umfassen, die der Spezifierung des Anschlusstyps und der Übertragungsprotokolle dienen, die bei der Kommunikation mit dem jeweiligen IP-Telefonanschluss (31, 32, 33) zu nutzen sind.

6. Verfahren zur Verbindungssteuerung gemäß Anspruch 2,
**dadurch gekennzeichnet,**
**dass** dieses Verfahren einen weiteren Schritt umfasst: ein Verfahren zur Prüfung der Zugriffsberechtigung (62), das zwischen den IP-Telefonanschlüssen (31, 32, 33) und dem Verbindungssteuerungs-Server (2) durchgeführt wird.

7. Verfahren zur Verbindungssteuerung gemäß Anspruch 2,
**dadurch gekennzeichnet,**
**dass** dieses Verfahren einen weiteren Schritt umfasst: die automatische Durchführung eines Registrierungsvorgangs, sobald die Konfigurationskarte mit den IP-Telefonanschlüssen (31, 32, 33) verbunden ist.

8. Verfahren zur Verbindungssteuerung gemäß Anspruch 1,
**dadurch gekennzeichnet,**
**dass** der Verbindungs steuerungs-Server (2) alle IP-Telefonanschlüsse (31, 32, 33) unterstützt, die der Rufnummer für den Aufbau von VoIP-Verbindungen zugewiesen sind, eine eingehende VoIP-Verbindung jedoch dem IP-Telefonanschluss (31) zuweist, von dem er zuletzt eine Präsenzmeldung (63) erhalten hat.

9. Verfahren zur Verbindungssteuerung gemäß Anspruch 1,
**dadurch gekennzeichnet,**
**dass** die IP-Telefonanschlüsse (31, 32, 33), die einer gemeinsam genutzten Rufnummer zugewiesen sind, Geräte unterschiedlichen Typs sind.

10. Verbindungssteuerungs-Server (2) zur Bereitstellung von IP-basierten Telefondiensten in einem Telekommunikationsnetz (1), wobei der Verbindungssteuerungs-Server (2) dazu dient, die an eine Rufnummer gerichteten VoIP-Verbindungen zu steuern,
**dadurch gekennzeichnet,**
**dass** der Verbindungssteuerungs-Server (2) eine Übertragungseinheit (22) umfasst, die dem Empfang von Präsenzmeldungen (63) dient, die von den IP-Telefonanschlüssen (31, 32, 33) gesendet werden, sowie eine Steuerungseinheit (21, 24), deren Aufgaben darin bestehen:
Zuweisung von zwei oder mehr IP-Telefonanschlüssen (31, 32, 33) an die genannte, von diesen IP-Telefonanschlüssen (31, 32, 33) gemeinsam genutzte Rufnummer und Registrierung der genannten IP-Telefonanschlüsse (31, 32, 33) im Verbindungssteuerungs-Server (2) durch Speichern der IP-Adressdaten der genannten IP-Telefonanschlüsse, die im Zusammenhang mit einer Registrierungsanforderung eingegangen sind, in einem Register (23) des Verbindungssteuerungs-Servers (2); wenn eine Präsenzmeldung (63) von einem der genannten IP-Telefonanschlüsse (31) eingeht, wenn die Präsenztaste (34) dieses IP-Telefonanschlusses (31) betätigt wird, Lokalisierung der IP-Adressdaten, die dem genannten IP-Telefonanschluss (31) zugewiesen und im Register (23) des genannten Verbindungssteuerungs-Servers (2) gespeichert sind, im Register (23) des Verbindungssteuerungs-Server (2);
und, durch Nutzung der lokalisierten IP-Adressdaten, Routing einer an die Rufnummer gerichteten VoIP-Verbindung an denjenigen IP-Telefonanschluss (31) der dieser Rufnummer zugewiesenen IP-Telefonanschlüsse (31, 32, 33), von dem der Verbindungssteuerungs-Server (2) eine Präsenzmeldung (63) erhalten hat.

## Revendications

1. Procédé de commande d'appel pour les services de téléphonie basés sur l'IP **caractérisé en ce que** le procédé comprend les étapes suivantes :
Affectation d'un ou plusieurs terminaux téléphoniques IP (31, 32, 33) à un numéro de téléphone communément partagé par lesdits terminaux téléphoniques IP et enregistrement desdits terminaux téléphoniques IP (31, 32, 33) dans un serveur de commande d'appel (2) en stockant les données d'adresse IP desdits terminaux téléphoniques IP (31, 32, 33) reçues dans le contexte d'un message de demande d'enregistrement dans le registre (23) dudit serveur de commande d'appel (2) pour la commande des appels VoIP adressés à ce numéro de téléphone ;
Transmission d'un message de présence (63) de l'un des terminaux téléphoniques IP (31) vers ledit serveur de commande d'appel (2) lorsqu'un bouton de présence (34) de ce téléphone IP (31) est enfoncé ;
Lors de la réception dudit message de présence (63) de l'un des terminaux téléphoniques IP (31), recherche des données d'adresse IP affectées audit un des terminaux téléphoniques IP (31) et stockées dans le registre (23) dudit serveur de commande d'appel (2) au sein du registre (23) du serveur de commande d'appel (2); et
Acheminement, à l'aide des données d'adresse IP recherchées, d'un appel VoIP adressé au numéro de téléphone au terminal téléphonique IP (31) parmi les terminaux téléphoniques IP (31, 32, 33) affectés au numéro de téléphone dont le serveur de commande d'appel (2) a reçu le message de présence (63).

2. Procédé de commande d'appel selon la revendication 1, **caractérisé en ce que** le procédé comprend en plus les étapes suivantes :
Transfert des données de configuration de téléphone IP (60) stockées sur une carte de configuration (4) à un abonné (51) depuis la carte de configuration (4) vers un ou plusieurs des terminaux téléphoniques IP (31, 32, 33), les données de configuration de téléphone IP (60) comprenant les données d'adresse du serveur de commande d'appel (2) ;
Entrée en contact avec le serveur de commande d'appel (2) au moyen des données d'adresse transférées ; transfert des données de terminal (61) du terminal téléphonique IP (31) au serveur de commande d'appel (2), les données de terminal (61) incluant l'adresse IP du terminal téléphonique IP (31); et
Enregistrement du terminal téléphonique IP (31) au moyen des données de terminal (61) reçues.

3. Procédé de commande d'appel selon la revendication 2, **caractérisé en ce que** les données de configuration de téléphone IP (60) comprennent des données d'abonné, que les terminaux téléphoniques IP (31, 32, 33) transfèrent les données d'abonné au serveur de commande d'appel (2) et que le serveur de commande d'appel (2) affecte les terminaux téléphoniques IP (31, 32, 33), au numéro de téléphone au moyen des données d'abonné reçues.

4. Procédé de commande d'appel selon la revendication 2, **caractérisé en ce que** les données de configuration de téléphone IP (60) comprennent un profil de qualité de service précisant la qualité des services affectée à l'utilisateur (51).

5. Procédé de commande d'appel selon la revendication 2, **caractérisé en ce que** les données de terminal (61) comprennent des descripteurs de terminal précisant le type de terminal et les protocoles de communication à utiliser pour communiquer avec les terminaux téléphoniques IP (31, 32, 33) respectifs.

6. Procédé de commande d'appel selon la revendication 2, **caractérisé en ce que** le procédé comprend l'étape supplémentaire d'exécution d'une procédure d'authentification (62) entre les terminaux téléphoniques IP (31, 32, 33) et le serveur de commande d'appel (2).

7. Procédé de commande d'appel selon la revendication 2, **caractérisé en ce que** le procédé comprend l'étape supplémentaire d'exécution automatique d'un processus d'authentification dès que la carte de configuration est connecté au terminal téléphonique IP (31, 32, 33)

8. Procédé de commande d'appel selon la revendication 1, **caractérisé en ce que** le serveur de commande d'appel (2) prend en charge la totalité des terminaux téléphoniques IP (31, 32, 33) affectés au numéro de téléphone lors de l'établissement des appels VoIP, mais dirige les appels VoIP entrants vers le terminal téléphonique IP (31) de la part duquel il a reçu le message de présence (63) en dernier.

9. Procédé de commande d'appel selon la revendication 1, **caractérisé en ce que** les terminaux téléphoniques IP (31, 32, 33) affectés à un numéro de téléphone communément partagé par lesdits terminaux téléphoniques IP sont des terminaux de types différents.

10. Serveur de commande d'appel (2) destiné à fournir des services de téléphonie basés sur l'IP au sein d'un réseau de communication (1), dans lequel le serveur de commande d'appel (2) prend en charge la commande des appels VoIP adressés à un numéro de téléphone, **caractérisé en ce que** le serveur de commande d'appel (2) comprend une unité de communication (22) pour recevoir des messages de présence (63) de la part de terminaux téléphoniques IP (31, 32, 33) et une unité de commande d'appel (21, 24) conçue pour : affecter deux terminaux téléphoniques IP (31, 32, 33) ou plus audit numéro de téléphone communément partagé par lesdits terminaux téléphoniques IP (31, 32, 33) et enregistrer lesdits terminaux téléphoniques IP (31, 32, 33) dans le serveur de commande d'appel (2) en stockant les données d'adresse IP desdits terminaux téléphoniques IP reçues dans le contexte d'un message de demande d'enregistrement dans un registre (23) du serveur de commande d'appel (2) ; lors de la réception d'un message de présence (63) de l'un desdits terminaux téléphoniques IP (31), lorsqu'un bouton de présence (34) de ce téléphone IP (31) est enfoncé, rechercher les données d'adresse IP affectées audit un des terminaux téléphoniques IP (31) et stockées dans le registre (23) dudit serveur de commande d'appel (2) au sein du registre (23) du serveur de commande d'appel (2) ; et acheminer, à l'aide des données d'adresse IP trouvées, un appel VoIP adressé au numéro de téléphone au terminal téléphonique IP (31) de celui des terminaux téléphoniques IP (31, 32, 33) affectés au numéro de téléphone dont le serveur de commande d'appel (2) a reçu le message de présence (63).
